# EUROPEAN PATENT APPLICATION

(11) **EP 4 691 602 A1**
(43) Date of publication of application: **11.02.2026**
(21) Application number: 24823131.8
(22) Date of filing: 08.05.2024
(51) Int. Cl.: B01D 53/14, B01D 53/62, B01D 53/78, C01B 32/50

(54) **CARBON DIOXIDE RECOVERY SYSTEM**

(30) Priority: 13.06.2023 US 202318333813
(71) Applicant: Mitsubishi Heavy Industries, Ltd., Tokyo 100-8332 (JP)
(72) Inventor: SHIMADA Daisuke, Houston, Texas 77046 (US); KAMIJO Takashi, Tokyo 100-8332 (JP); KISHIMOTO Shinya, Tokyo 100-8332 (JP); MIYAMOTO Osamu, Yokohama-shi, Kanagawa 220-0012 (JP); OTANI Akihito, Yokohama-shi, Kanagawa 220-0012 (JP)
(74) Representative: Studio Torta S.p.A.
(86) International application number: PCT/JP2024/017140
(87) International publication number: WO 2024/257509

(57) **Abstract**

A carbon dioxide recovery system includes an absorption tower, a regeneration tower, a rich liquid line, a lean liquid line, a heat exchange unit, and a warm fluid supply unit. The absorption tower allows a carbon dioxide containing gas containing carbon dioxide to contact an absorption liquid capable of absorbing carbon dioxide and produces a rich liquid corresponding to an absorption liquid having absorbed carbon dioxide of the carbon dioxide containing gas. The regeneration tower heats the rich liquid to discharge carbon dioxide from the rich liquid and produces a lean liquid corresponding to an absorption liquid having discharged carbon dioxide. The rich liquid line guides the rich liquid from the absorption tower to the regeneration tower. The lean liquid line guides the lean liquid from the regeneration tower to the absorption tower. The heat exchange unit exchanges the temperature of the lean liquid flowing through the lean liquid line with the absorption liquid having a temperature different from that of the lean liquid flowing through the lean liquid line. The warm fluid supply unit can supply a warm fluid for warming the heat exchange unit to the heat exchange unit.

## Description

### [Technical Field]

The present disclosure relates to a carbon dioxide recovery system.

### [Background Art]

Patent Document 1 discloses a carbon dioxide recovery system which recovers carbon dioxide by allowing a gas containing carbon dioxide to contact an absorption liquid. The carbon dioxide recovery system of Patent Document 1 includes an absorption tower and a regeneration tower. The absorption tower allows carbon dioxide to be absorbed to the absorption liquid. The regeneration tower discharges the absorption liquid having absorbed carbon dioxide by heating the absorption liquid having absorbed carbon dioxide by the absorption tower. The absorption liquid having discharged carbon dioxide by the regeneration tower is carried to the absorption tower and is used to absorb carbon dioxide.

### [Prior Art Document]

### [Patent Document]

[Patent Document 1] Japanese Unexamined Patent Application, First Publication No. 2012-000539

### [Summary of Invention]

### [Technical Problem to be solved]

In many cases, the carbon dioxide recovery system of Patent Document 1 includes a heat exchanger such as a plate type heat exchanger in order to recover heat of the absorption liquid having discharged carbon dioxide in the regeneration tower.

Such a heat exchanger is maintained in a high temperature state during operation of the carbon dioxide recovery system, but the temperature decreases to a low temperature state when the operation is stopped. That is, when the carbon dioxide recovery system is repeatedly started and stopped, the high temperature state and the low temperature state of the heat exchanger are repeated. Therefore, since a load is applied to constituent members such as a gasket of the heat exchanger, there is a possibility that constituent members of the heat exchanger will be damaged earlier than expected.

The present disclosure has been made in view of the above-described circumstances and provides a carbon dioxide recovery system capable of reducing a load on constituent members of a heat exchanger.

### [Solution to Problem]

According to an aspect of the present disclosure, a carbon dioxide recovery system includes an absorption tower, a regeneration tower, a rich liquid line, a lean liquid line, a heat exchange unit, and a warm fluid supply unit. The absorption tower produces a rich liquid corresponding to an absorption liquid having absorbed carbon dioxide of a carbon dioxide containing gas containing carbon dioxide by allowing the carbon dioxide containing gas to contact an absorption liquid having absorbed carbon dioxide. The regeneration tower discharges carbon dioxide from the rich liquid by heating the rich liquid and produces a lean liquid corresponding to an absorption liquid having discharged carbon dioxide. The rich liquid line guides the rich liquid from the absorption tower to the regeneration tower. The lean liquid line guides the lean liquid from the regeneration tower to the absorption tower. The heat exchange unit exchanges the heat of the lean liquid flowing through the lean liquid line with the absorption liquid having a temperature different from that of the lean liquid flowing through the lean liquid line. The warm fluid supply unit can supply a warm fluid for warming the heat exchange unit to the heat exchange unit.

### [Advantageous Effects of Invention]

According to the carbon dioxide recovery system of the present disclosure, it is possible to reduce the load on the constituent members of the heat exchanger.

### [Brief Description of Drawings]

FIG. 1 is a diagram showing a schematic configuration of a carbon dioxide recovery system in a first embodiment of the present disclosure.
FIG. 2 is a diagram showing a hardware configuration of a control device of the carbon dioxide recovery system according to the embodiment of the present disclosure.
FIG. 3 is a functional block diagram of the control device according to the first embodiment of the present disclosure.
FIG. 4 is a flowchart of a method of operating the carbon dioxide recovery system according to the embodiment of the present disclosure.
FIG. 5 is a diagram showing a first state of the carbon dioxide recovery system according to the first embodiment of the present disclosure.
FIG. 6 is a diagram showing a transition state of the carbon dioxide recovery system according to the first embodiment of the present disclosure.
FIG. 7 is a diagram showing a second state of the carbon dioxide recovery system according to the first embodiment of the present disclosure.
FIG. 8 is a diagram showing a schematic configuration of a carbon dioxide recovery system according to a second embodiment of the present disclosure.
FIG. 9 is a functional block diagram of a control device according to the second embodiment of the present disclosure.
FIG. 10 is a diagram showing a first state of the carbon dioxide recovery system according to the second embodiment of the present disclosure.
FIG. 11 is a diagram showing a transition state of the carbon dioxide recovery system according to the second embodiment of the present disclosure.
FIG. 12 is a diagram showing a second state of the carbon dioxide recovery system according to the second embodiment of the present disclosure.

### [Description of Embodiments]

Hereinafter, a carbon dioxide recovery system according to an embodiment of the present disclosure will be described with reference to the drawings.

### <First embodiment>

A carbon dioxide recovery system of a first embodiment recovers carbon dioxide from a carbon dioxide containing gas containing carbon dioxide. Examples of the carbon dioxide containing gas include exhaust gases from devices that burn fuel, such as gas turbines, internal combustion engines, and boilers.

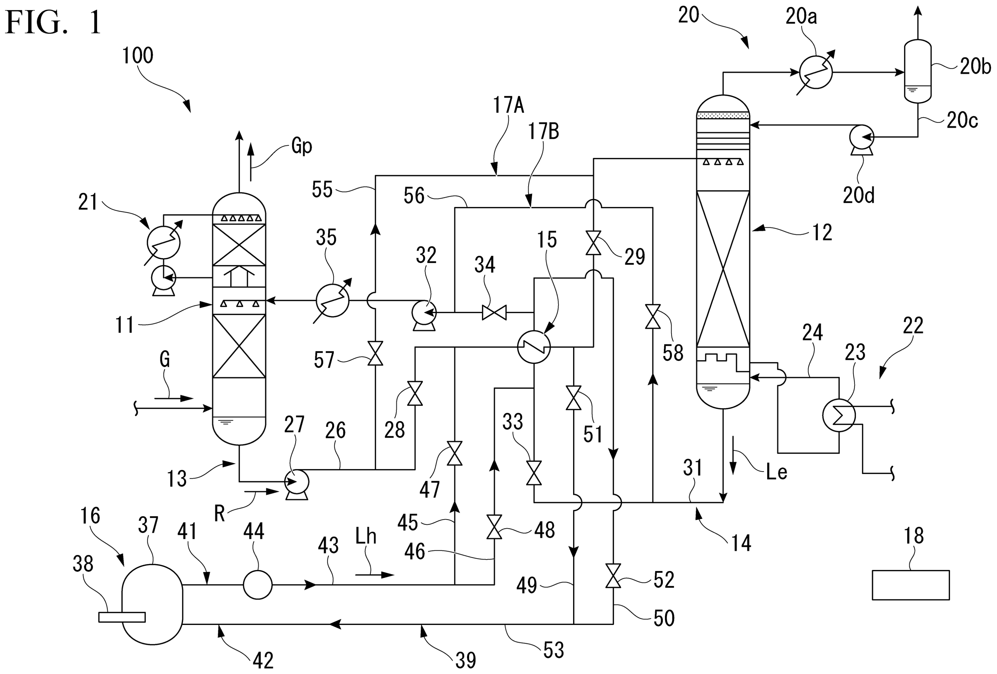

FIG. 1 is a diagram showing a schematic configuration of the carbon dioxide recovery system in the first embodiment of the present disclosure.

As shown in FIG. 1, a carbon dioxide recovery system 100 of the first embodiment includes an absorption tower 11, a regeneration tower 12, a rich liquid line 13, a lean liquid line 14, a heat exchange unit 15, a warm fluid supply unit 16, heat exchange unit bypass lines 17A and 17B, and a control device 18.

The absorption tower 11 produces a rich liquid R by causing a carbon dioxide containing gas G containing carbon dioxide to contact an absorption liquid. The absorption liquid can absorb the carbon dioxide by the contact with the carbon dioxide containing gas G. The rich liquid R is an absorption liquid having absorbed the carbon dioxide of the carbon dioxide containing gas G. The carbon dioxide containing gas G is introduced into the absorption tower 11 using a blower (not shown) or the like. As the absorption liquid, an amine-based absorption liquid that absorbs carbon dioxide by chemical absorption can be exemplified. MEA (monoethanolamine) can be exemplified as the amine-based absorption liquid. The absorption tower 11 includes a filler (not shown) formed of an iron-based metallic material or the like in order to increase the contact area therein.

The carbon dioxide containing gas G introduced into the absorption tower 11 contacts the absorption liquid (lean liquid Le) sprayed from the upper portion of the absorption tower 11 by a nozzle or the like. Accordingly, the carbon dioxide of the carbon dioxide containing gas G is absorbed to the absorption liquid (lean liquid Le) and the absorption liquid becomes the rich liquid R. The remaining processed gas Gp having absorbed carbon dioxide by the absorption liquid is discharged from the upper portion of the absorption tower 11.

The carbon dioxide containing gas G may be at a high temperature, for example, when the gas is an exhaust gas produced by the combustion of fuel. In this case, the carbon dioxide containing gas G may be introduced into the absorption tower 11 after the temperature decreases. As a device that decreases the temperature of the carbon dioxide containing gas G, a cooling tower (not shown) or the like which causes the carbon dioxide containing gas G to contact the cooling water can be used.

The absorption tower 11 of this embodiment includes a cleaning unit 21 which cleans the processed gas Gp by cleaning water before the gas is discharged to the outside. The cleaning unit 21 captures the absorption liquid and the like contained in the processed gas Gp with cleaning water inside the absorption tower 11. The absorption tower 11 of this embodiment includes the cleaning unit 21 therein, but the present disclosure is not limited to this configuration. For example, the cleaning unit 21 may be replaced with a cleaning tower (not shown) provided outside the absorption tower 11.

The regeneration tower 12 produces a lean liquid Le corresponding to an absorption liquid having discharged carbon dioxide. In other words, the regeneration tower 12 discharges carbon dioxide from the rich liquid R which is the absorption liquid having absorbed carbon dioxide and reuses the liquid as the absorption liquid capable of absorbing the carbon dioxide. The regeneration tower 12 discharges carbon dioxide by heating the rich liquid R. Additionally, a filler (not shown) formed of an iron-based metal material or the like is provided inside the regeneration tower 12.

More specifically, the rich liquid R which is discharged from the upper portion of the regeneration tower 12 into the tower discharges carbon dioxide by heating the steam from the lower portion of the regeneration tower 12 and becomes the lean liquid Le from which almost all carbon dioxide has been removed at the time when the liquid flows down to the lower portion of the regeneration tower 12. A steam heating system 22 for heating the lean liquid Le is connected to the regeneration tower 12 of this embodiment. The steam heating system 22 includes a reboiler 23 and a circulation pipe 24. The reboiler 23 heats the absorption liquid supplied to the regeneration tower 12 as the lean liquid Le by using the steam supplied from the outside as a heat source. The circulation pipe 24 guides the absorption liquid corresponding to the lean liquid Le accumulated at the lower portion of the regeneration tower 12 toward the reboiler 23 and returns the lean liquid Le containing the steam generated by the heating in the reboiler 23 into the regeneration tower 12. As described above, the steam generated when the reboiler 23 heats the lean liquid Le heats the rich liquid R flowing from the upper portion of the regeneration tower 12 inside the regeneration tower 12.

The carbon dioxide gas discharged from the rich liquid R is discharged from the upper portion of the regeneration tower 12. The absorption liquid corresponding to the lean liquid Le returned to the regeneration tower 12 by the steam heating system 22 is accumulated at the lower portion of the regeneration tower 12. The lean liquid Le which is accumulated at the lower portion of the regeneration tower 12 is sent toward absorption tower 11 through the lean liquid line 14.

Here, the carbon dioxide recovery system 100 illustrated in this embodiment includes a recovery unit 20. The recovery unit 20 recovers the gaseous carbon dioxide separated in the regeneration tower 12. The recovery unit 20 includes a condenser 20a, a reflux tower 20b, a reflux pipe 20c, and a reflux pump 20d. The carbon dioxide gas which is discharged from the regeneration tower 12 through the reflux pipe 20c contains mist of the absorption liquid, gasified absorption liquid, and the like. Therefore, the recovery unit 20 removes the absorption liquid from the carbon dioxide by condensing the absorption liquid with the condenser 20a and separating the gas and liquid with the reflux tower 20b. The carbon dioxide gas which is recovered by the reflux tower 20b is stored in, for example, a carbon dioxide recovery tank (not shown) and the like. On the other hand, the absorption liquid which is separated by the reflux tower 20b is returned into the regeneration tower 12 by the reflux pump 20d. Additionally, the recovery unit 20 may be provided as necessary and may be omitted, for example.

The rich liquid line 13 guides the rich liquid R from the absorption tower 11 to the regeneration tower 12. The rich liquid line 13 of this embodiment includes a tubular rich liquid supply pipe 26 which forms a flow path through which the rich liquid R flows, a first pump 27 which sends the rich liquid R toward the regeneration tower 12, and a first valve 28 and a second valve 29 which open and close the flow path in the rich liquid supply pipe 26.

The lean liquid line 14 guides the lean liquid Le from the regeneration tower 12 to the absorption tower 11. The lean liquid line 14 of this embodiment includes a tubular lean liquid supply pipe 31 which forms a flow path through which the lean liquid Le flows, a second pump 32 which sends the lean liquid Le toward the absorption tower 11, and a third valve 33 and a fourth valve 34 which open and close the flow path in the lean liquid supply pipe 31. The first valve 28, the second valve 29, the third valve 33, and the fourth valve 34 are the control valves which can be controlled to open and close by the control device 18 to be described later. Additionally, the first valve 28, the second valve 29, the third valve 33, and the fourth valve 34 may not only be controlled to open and close, but may also be able to adjust the valve opening degree.

The heat exchange unit 15 exchanges the heat of the lean liquid Le flowing through the lean liquid line 14 with the absorption liquid having a temperature different from that of the lean liquid Le flowing through the lean liquid line 14. The heat exchange unit 15 of this embodiment is connected to both the rich liquid supply pipe 26 and the lean liquid supply pipe 31. In other words, the heat exchange unit 15 of this embodiment can exchange heat between the rich liquid R flowing through the rich liquid supply pipe 26 of the rich liquid line 13 and the lean liquid Le flowing through the lean liquid supply pipe 31 of the lean liquid line 14. When the carbon dioxide recovery system 100 is operated, in other words, when the carbon dioxide recovery system 100 recovers carbon dioxide from the exhaust gas G, the heat exchange unit 15 is at a high temperature (for example, about 90°C to 120°C).

In this embodiment, the first valve 28 of the rich liquid line 13 is disposed at a position closer to the absorption tower 11 than the heat exchange unit 15. The second valve 29 of the rich liquid line 13 is disposed at a position closer to the regeneration tower 12 than the heat exchange unit 15. That is, the heat exchange unit 15 is provided in the middle of the rich liquid supply pipe 26 between the first valve 28 and the second valve 29. The first pump of the rich liquid line 13 is disposed between the first valve 28 and the absorption tower 11.

**In** this embodiment, the third valve 33 of the lean liquid line 14 is disposed at a position closer to the regeneration tower 12 than the heat exchange unit 15. The fourth valve 34 of the lean liquid line 14 is disposed at a position closer to the absorption tower 11 than the heat exchange unit 15. That is, the heat exchange unit 15 is provided in the middle of the lean liquid supply pipe 31 between the third valve 33 and the fourth valve 34. The second pump 32 of the lean liquid line 14 is disposed between the fourth valve 34 and the absorption tower 11. However, the arrangement of the second pump 32 is not limited to the above-described arrangement if the second pump is provided in the middle of the lean liquid supply pipe 31.

The lean liquid line 14 of this embodiment further includes a cooling device 35 between the second pump 32 and the absorption tower 11. This cooling device 35 further cools the lean liquid Le heaving exchanged heat with the rich liquid R by the heat exchange unit 15.

The warm fluid supply unit 16 can supply a warm fluid Lh for heating the heat exchange unit 15 to the heat exchange unit 15. The warm fluid supply unit 16 includes a vessel 37, a heating unit 38, and a circulation line 39.

The vessel 37 is a container that stores the warm fluid Lh. The heating unit 38 heats the warm fluid Lh. The heating unit 38 of this embodiment is attached to the vessel 37 and heats the warm fluid Lh in the vessel 37 to a predetermined temperature (for example, 30°C or higher).

The circulation line 39 supplies the warm fluid Lh to the heat exchange unit 15 and returns the warm fluid Lh supplied to the heat exchange unit 15 to the vessel 37. The circulation line 39 of this embodiment includes a warm fluid supply line 41 and a warm fluid return line 42.

The warm fluid supply line 41 supplies the warm fluid Lh from the vessel 37 to the heat exchange unit 15. The warm fluid supply line 41 includes a main supply pipe 43, a warm fluid supply pump 44, a first supply pipe 45, a second supply pipe 46, a fifth valve 47, and a sixth valve 48.

The main supply pipe 43 guides the warm fluid Lh in the vessel 37 to the outside of the vessel 37. Each of the first supply pipe 45 and the second supply pipe 46 is connected to the main supply pipe 43. In other words, the first supply pipe 45 and the second supply pipe 46 are branched and connected to the main supply pipe 43. The warm fluid Lh flowing through the main supply pipe 43 is divided into the first supply pipe 45 and the second supply pipe 46 to flow therethrough.

The first supply pipe 45 allows the main supply pipe 43 to communicate with the rich liquid supply pipe 26 of the rich liquid line 13. The first supply pipe 45 is connected to the rich liquid supply pipe 26 between the first valve 28 and the heat exchange unit 15. The second supply pipe 46 allows the main supply pipe 43 to communicate with the lean liquid supply pipe 31 of the lean liquid line 14. The second supply pipe 46 is connected to the lean liquid supply pipe 31 between the third valve 33 and the heat exchange unit 15. The fifth valve 47 is provided in the middle of the first supply pipe 45 and opens and closes the flow path of the first supply pipe 45. The sixth valve 48 is provided in the middle of the second supply pipe 46 and opens and closes the flow path of the second supply pipe 46.

The warm fluid return line 42 returns the warm fluid Lh supplied by the warm fluid supply line 41 into the vessel 37. The warm fluid return line 42 includes a first return pipe 49, a second return pipe 50, a seventh valve 51, an eighth valve 52, and a main return pipe 53.

The first return pipe 49 allows the rich liquid supply pipe 26 of the rich liquid line 13 to communicate with the main return pipe 53. The first return pipe 49 is connected to the rich liquid supply pipe 26 between the heat exchange unit 15 and the second valve 29.

The second return pipe 50 allows the lean liquid supply pipe 31 of the lean liquid line 14 to communicate with the main return pipe 53. The second return pipe 50 is connected to the lean liquid supply pipe 31 between the heat exchange unit 15 and the fourth valve 34.

The main return pipe 53 allows the first return pipe 49 and the second return pipe 50 to communicate with the vessel 37. The warm fluid Lh flowing through the first return pipe 49 and the warm fluid Lh flowing through the second return pipe 50 join together and return into the vessel 37 through the main return pipe 53.

The seventh valve 51 is provided in the middle of the first return pipe 49 and opens and closes the flow path of the first return pipe 49. The eighth valve 52 is provided in the middle of the second return pipe 50 and opens and closes the flow path of the second return pipe 50. Additionally, a warm fluid return pump (not shown) for returning the warm fluid Lh flowing through the warm fluid return line 42 to the vessel 37 may be provided instead of the above-described warm fluid supply pump 44.

The heat exchange unit bypass lines 17A and 17B bypass the absorption liquid flowing through the rich liquid line 13 from the absorption tower 11 toward the regeneration tower 12 and the absorption liquid flowing through the lean liquid line 14 from the regeneration tower 12 toward the absorption tower 11 so that each absorption liquid does not flow into the heat exchange unit 15. The heat exchange unit bypass line 17A includes a first bypass pipe 55 and a ninth valve 57. The first bypass pipe 55 allows the rich liquid supply pipe 26 between the absorption tower 11 and the first valve 28 to communicate with the rich liquid supply pipe 26 between the second valve 29 and the regeneration tower 12. The ninth valve 57 opens and closes the flow path of the first bypass pipe 55. The heat exchange unit bypass line 17B includes a second bypass pipe 56 and a tenth valve 58. The second bypass pipe 56 allows the lean liquid supply pipe 31 between the regeneration tower 12 and the third valve 33 to communicate with the lean liquid supply pipe 31 between the fourth valve 34 and the absorption tower 11. The tenth valve 58 opens and closes the flow path of the second bypass pipe 56.

### (Hardware configuration diagram)

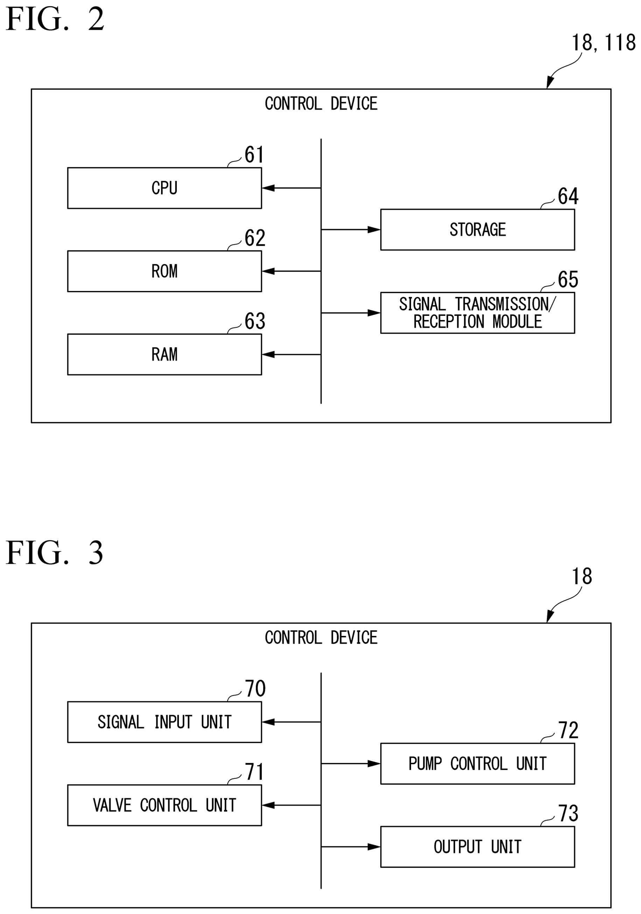

FIG. 2 is a diagram showing a hardware configuration of the control device of the carbon dioxide recovery system according to the embodiment of the present disclosure.

The control device 18 can control the operation of the first valve 28, the second valve 29, the third valve 33, the fourth valve 34, the fifth valve 47, the sixth valve 48, the seventh valve 51, the eighth valve 52, the ninth valve 57, and the tenth valve 58 which are a plurality of control valves. The control device 18 can also switch the operation and stop of the warm fluid supply pump 44.

As shown in FIG. 2, the control device 18 is a computer including a central processing unit (CPU) 61, a read only memory (ROM) 62, a random access memory (RAM) 63, a storage 64, and a signal transmission/reception module 65.

### (Functional block diagram)

FIG. 3 is a functional block diagram of the control device according to the first embodiment of the present disclosure.

As shown in FIG. 3, the CPU 61 of the control device 18 realizes the functional configuration of each of a signal input unit 70, a valve control unit 71, a pump control unit 72, and an output unit 73 by executing a program stored in advance in a storage device such as the ROM 62 or the storage 64.

The signal input unit 70 receives information on the operation status of the carbon dioxide recovery system 100 via the signal transmission/reception module 65 which is hardware.

The valve control unit 71 generates a control signal for controlling the operation of the first valve 28, the second valve 29, the third valve 33, the fourth valve 34, the fifth valve 47, the sixth valve 48, the seventh valve 51, the eighth valve 52, the ninth valve 57 and the tenth valve 58 based on the information on the operation status of the carbon dioxide recovery system 100 received by the signal input unit 70.

The pump control unit 72 generates a control signal for controlling the operation of the warm fluid supply pump 44 based on the information on the operation status of the carbon dioxide recovery system 100 received by the signal input unit 70.

The output unit 73 outputs the control signals generated by the valve control unit 71 and the pump control unit 72 to each of the first valve 28, the second valve 29, the third valve 33, the fourth valve 34, the fifth valve 47, the sixth valve 48, the seventh valve 51, the eighth valve 52, the ninth valve 57, the tenth valve 58, and the warm fluid supply pump 44 via the signal transmission/reception module 65.

The valve control unit 71 and the pump control unit 72 of the control device 18 can switch a first state in which the warm fluid Lh is supplied to the heat exchange unit 15 to warm the heat exchange unit 15 and a second state in which each of the absorption liquid from the absorption tower 11 and the absorption liquid from the regeneration tower 12 is supplied to the heat exchange unit 15 to exchange heat therebetween. The first state and the second state can be switched based on, for example, information on the discharge status of the exhaust gas G. The switching of the first state and the second state may be performed based on the operation input from the operator. The valve control unit 71 and the pump control unit 72 of this embodiment perform control of a transition state in which carbon dioxide starts to be recovered from the exhaust gas G while continuing the supply of the warm fluid Lh to the heat exchange unit 15 between the first state and the second state.

### (Method of operating carbon dioxide recovery system)

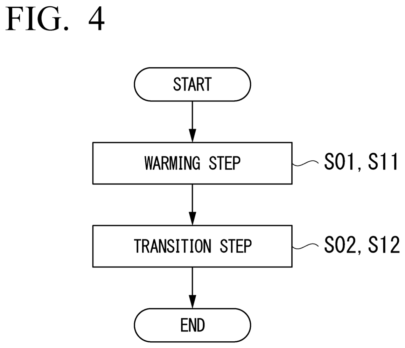

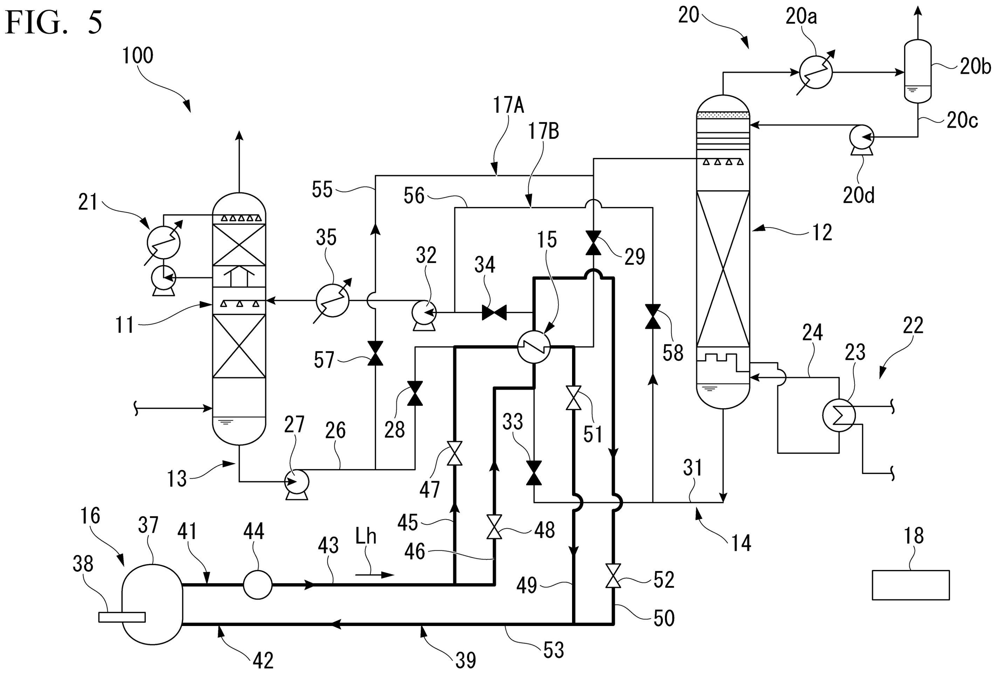

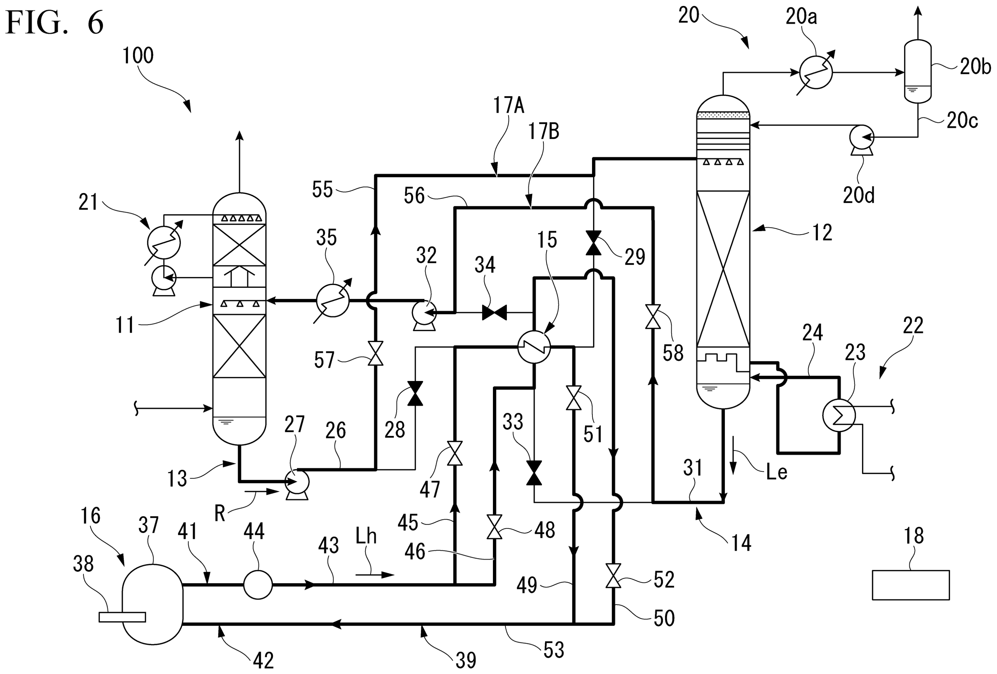

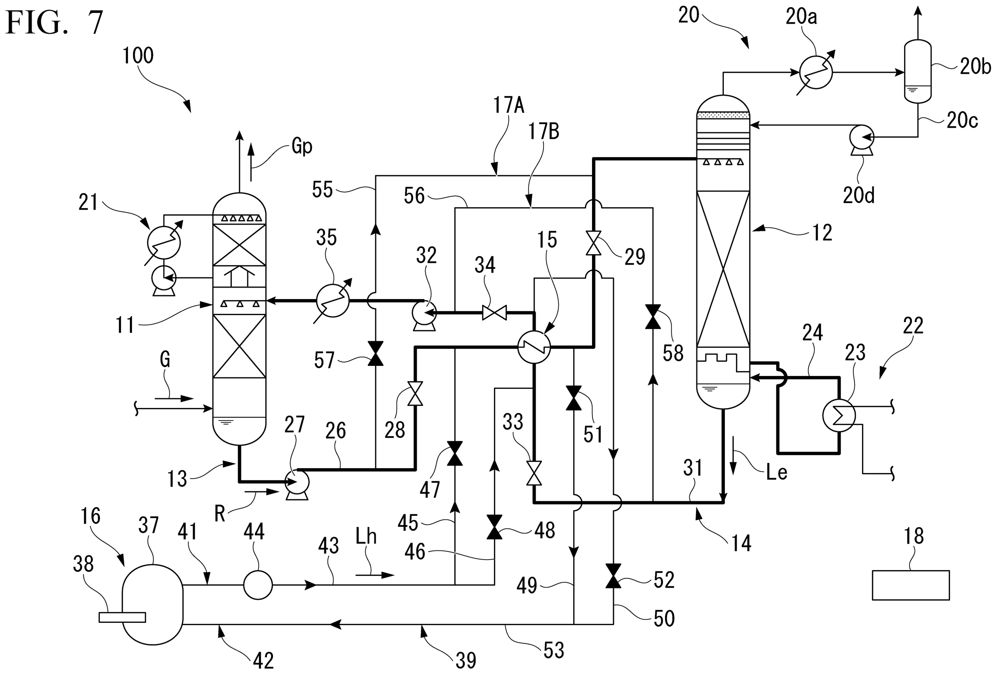

FIG. 4 is a flowchart of a method of operating the carbon dioxide recovery system according to the embodiment of the present disclosure. FIG. 5 is a diagram showing a first state of the carbon dioxide recovery system according to the first embodiment of the present disclosure. FIG. 6 is a diagram showing a transition state of the carbon dioxide recovery system according to the first embodiment of the present disclosure. FIG. 7 is a diagram showing a second state of the carbon dioxide recovery system according to the first embodiment of the present disclosure.

As shown in FIG. 4, the method of operating the carbon dioxide recovery system of this embodiment performs a warming step S01 and a transition step S04 until the operation of the absorption tower 11 and the regeneration tower 12 is restarted after the operation thereof is stopped.

In the warming step S01, the first state is set so that the warm fluid Lh is supplied to the heat exchange unit 15 to warm the heat exchange unit 15.

In the transition step S04, the transition state is set so that the absorption liquid circulating between the absorption tower 11 and the regeneration tower 12 flows to bypass the heat exchange unit 15 while continuing the supply of the warm fluid Lh to the heat exchange unit 15 when the operation of the absorption tower 11 and the regeneration tower 12 is started from the state in which the absorption tower 11 and the regeneration tower 12 are stopped.

### (First state)

The first valve 28, the second valve 29, the third valve 33, the fourth valve 34, the fifth valve 47, the sixth valve 48, the seventh valve 51, the eighth valve 52, the ninth valve 57, and the tenth valve 58 are controlled so that the control device 18 allows the carbon dioxide recovery system 100 to be in the first state when the exhaust gas G is not introduced into the absorption tower 11 and the operation of the absorption tower 11 and the regeneration tower 12 is stopped. That is, as shown in FIG. 5, the control device 18 closes the first valve 28, the second valve 29, the third valve 33, the fourth valve 34, the ninth valve 57, and the tenth valve 58 and opens the fifth valve 47, the sixth valve 48, the seventh valve 51, and the eighth valve 52. The control device 18 further allows the warm fluid supply pump 44 to be in an operation state (warming step).

Accordingly, the warm fluid Lh in the vessel 37 is circulated between the heat exchange unit 15 and the vessel 37 by the circulation line 39 so that the heat exchange unit 15 is heated by the heat of the warm fluid Lh. Specifically, the warm fluid Lh in the vessel 37 is introduced into the main supply pipe 43 of the warm fluid supply line 41 and is divided into the first supply pipe 45 and the second supply pipe 46.

The warm fluid Lh flowing into the first supply pipe 45 flows from the first supply pipe 45 into the heat exchange unit 15 through the rich liquid supply pipe 26 closer to the absorption tower 11 than the heat exchange unit 15. The warm fluid Lh flowing into this heat exchange unit 15 warms the heat exchange unit 15 when passing through the heat exchange unit 15 and is discharged to the rich liquid supply pipe 26 closer to the regeneration tower 12 than the heat exchange unit 15. The warm fluid Lh discharged to the rich liquid supply pipe 26 close to the regeneration tower 12 is returned to the vessel 37 through the first return pipe 49 and the main return pipe 53.

The warm fluid Lh flowing into the second supply pipe 46 flows from the second supply pipe 46 into the heat exchange unit 15 through the lean liquid supply pipe 31 closer to the regeneration tower 12 than the heat exchange unit 15. The warm fluid Lh flowing into this heat exchange unit 15 warms the heat exchange unit 15 when passing through the heat exchange unit 15 and is discharged to the lean liquid supply pipe 31 closer to the absorption tower 11 than the heat exchange unit 15. The warm fluid Lh discharged to the lean liquid supply pipe 31 close to the absorption tower 11 is returned to the vessel 37 through the second return pipe 50 and the main return pipe 53.

### (Transition state)

The control device 18 of this embodiment allows the carbon dioxide recovery system 100 to be in the second state through the transition state when the operation of the absorption tower 11 and the regeneration tower 12 is started from the state in which the operation of the absorption tower 11 and the regeneration tower 12 is stopped. In the transition state, the circulation of the absorption liquid between the absorption tower 11 and the regeneration tower 12 is started while continuing the supply of the warm fluid Lh to the heat exchange unit 15. This transition state is continued until the warming operation of the absorption tower 11 and the regeneration tower 12 is completed and at least the temperature of the absorption liquid sent from the regeneration tower 12 to the absorption tower 11 rises sufficiently (transition step). Here, for example, whether or not the temperature of the absorption liquid rises sufficiently can be estimated by the elapse time from the start of operation or can be determined by the measurement of the temperature of the absorption liquid.

As shown in FIG. 6, the control device 18 maintains the first valve 28, the second valve 29, the third valve 33, and the fourth valve 34 in a closed state and maintains the fifth valve 47, the sixth valve 48, the seventh valve 51, and the eighth valve 52 in an open state at the time when the first state is switched to the transition state. The control device 18 further opens the closed ninth and tenths valves 57 and 58. After switching to this transition state, the operation of the first pump 27, the second pump 32, and the like is started and the operation of the absorption tower 11 and the regeneration tower 12 is started. Additionally, the operation and stop of the first pump 27, the second pump 32, and the like may be performed by the operator, but may be automatically controlled by the control device 18 and the like.

In this transition state, the absorption liquid circulating between the absorption tower 11 and the regeneration tower 12 flows to bypass the heat exchange unit 15. Specifically, the absorption liquid in the absorption tower 11 is introduced into the rich liquid supply pipe 26 of the rich liquid line 13. The absorption liquid introduced into this rich liquid supply pipe 26 does not reach the heat exchange unit 15 and flows into the first bypass pipe 55. The absorption liquid flowing into the first bypass pipe 55 is supplied to the regeneration tower 12 through the rich liquid supply pipe 26 between the heat exchange unit 15 and the regeneration tower 12. On the other hand, the absorption liquid in the regeneration tower 12 is introduced into the lean liquid supply pipe 31 of the lean liquid line 14. The absorption liquid introduced into this lean liquid supply pipe 31 does not reach the heat exchange unit 15 and flows into the second bypass pipe 56. The absorption liquid flowing into the second bypass pipe 56 is supplied to the absorption tower 11 through the lean liquid supply pipe 31 between the heat exchange unit 15 and the absorption tower 11.

### (Second state)

The control device 18 of this embodiment switches to the second state (normal operation) in order to start the heat exchange using the heat exchange unit 15 when the warming operation of the absorption tower 11 and the regeneration tower 12 is completed. That is, as shown in FIG. 7, the control device 18 opens the first valve 28, the second valve 29, the third valve 33, and the fourth valve 34 and closes the fifth valve 47, the sixth valve 48, the seventh valve 51, the eighth valve 52, the ninth valve 57, and the tenth valve 58. The control device 18 also allows the warm fluid supply pump 44 to be in a stop state from the operation state.

Accordingly, the warm fluid Lh is stored in the vessel 37 while not circulating in the circulation line 39.

The absorption liquid having absorbed carbon dioxide in the absorption tower 11 reaches the heat exchange unit 15 through the rich liquid supply pipe 26 as the rich liquid R to exchange heat with the lean liquid Le in the heat exchange unit 15 and then is supplied to the regeneration tower 12. The absorption liquid having discharged carbon dioxide in the regeneration tower 12 reaches the heat exchange unit 15 through the lean liquid supply pipe 31 as the lean liquid Le to exchange heat with the rich liquid R in the heat exchange unit 15 and then is supplied to the absorption tower 11.

### (Operation and effect)

The carbon dioxide recovery system 100 of the above-described embodiment includes the absorption tower 11 which allows the exhaust gas G containing carbon dioxide to contact the absorption liquid capable of absorbing carbon dioxide and produces the rich liquid R having absorbed carbon dioxide of the exhaust gas G, the regeneration tower which discharges carbon dioxide from the rich liquid R by heating the rich liquid R and produces the lean liquid Le having discharged carbon dioxide, the rich liquid line 13 which guides the rich liquid R from the absorption tower 11 to the regeneration tower 12, the lean liquid line 14 which guides the lean liquid Le from the regeneration tower 12 to the absorption tower 11, the heat exchange unit 15 which exchanges the heat of the lean liquid Le flowing through the lean liquid line 14 with the rich liquid R, and the warm fluid supply unit 16 which can supply the warm fluid Lh for warming the heat exchange unit 15 to the heat exchange unit 15.

Accordingly, the heat exchange unit 15 can be heated by the warm fluid Lh even when the recovery of carbon dioxide using the absorption tower 11 and the regeneration tower 12 is stopped. Therefore, the heat exchange unit 15 does not repeat the high temperature state and the low temperature state even when the carbon dioxide recovery system 100 is repeatedly started and stopped. Thus, it is possible to suppress unexpected damage to the constituent members by reducing the load on the constituent members such as the gasket of the heat exchange unit 15.

The warm fluid supply unit 16 of the above-described embodiment includes the vessel 37 which stores the warm fluid Lh, the heating unit 38 which heats the warm fluid Lh, and the circulation line 39 which supplies the warm fluid Lh stored in the vessel 37 to the heat exchange unit 15 and returns the warm fluid Lh supplied to the heat exchange unit 15 to the vessel 37.

Accordingly, the warm fluid Lh stored in the vessel 37 can be heated by the heating unit 38 and the warm fluid Lh heated in the vessel 37 can be supplied to the heat exchange unit 15 to warm the heat exchange unit 15. The warm fluid Lh after heating the heat exchange unit 15 can be returned to the vessel 37 and heated again. Thus, it is possible to efficiently heat the warm fluid Lh and to easily continue the warming of the heat exchange unit 15.

The carbon dioxide recovery system 100 of the above-described embodiment further includes the heat exchange unit bypass lines 17A and 17B which bypass the absorption liquid so that the absorption liquid does not flow into the heat exchange unit 15.

Thus, since it is possible to prevent the low-temperature absorption liquid immediately after the start of operation from flowing into the heat exchange unit 15 while operating the absorption tower 11 and the regeneration tower 12, it is possible to further suppress a decrease in temperature of the heat exchange unit 15.

The carbon dioxide recovery system 100 of the above-described embodiment includes the first valve 28, the second valve 29, the third valve 33, the fourth valve 34, the fifth valve 47, the sixth valve 48, the seventh valve 51, the eighth valve 52, the ninth valve 57, and the tenth valve 58 which are a plurality of control valves switchable between the first state and the second state and the operation of the plurality of control valves is controlled by the control device 18.

Accordingly, it is possible to automatically switch the first state and the second state. As a result, it is possible to reduce the load on the operator compared to a case in which the valve is manually switched.

### (Second embodiment)

Next, a second embodiment of the present disclosure will be described with reference to the drawings. A carbon dioxide recovery system 200 of the second embodiment is different from the carbon dioxide recovery system 100 of the above-described first embodiment only in the configuration for warming the heat exchange unit. Therefore, the same parts as in the above-described first embodiment are denoted by the same reference numerals and overlapping descriptions are omitted with reference to FIGS. 2 and 4.

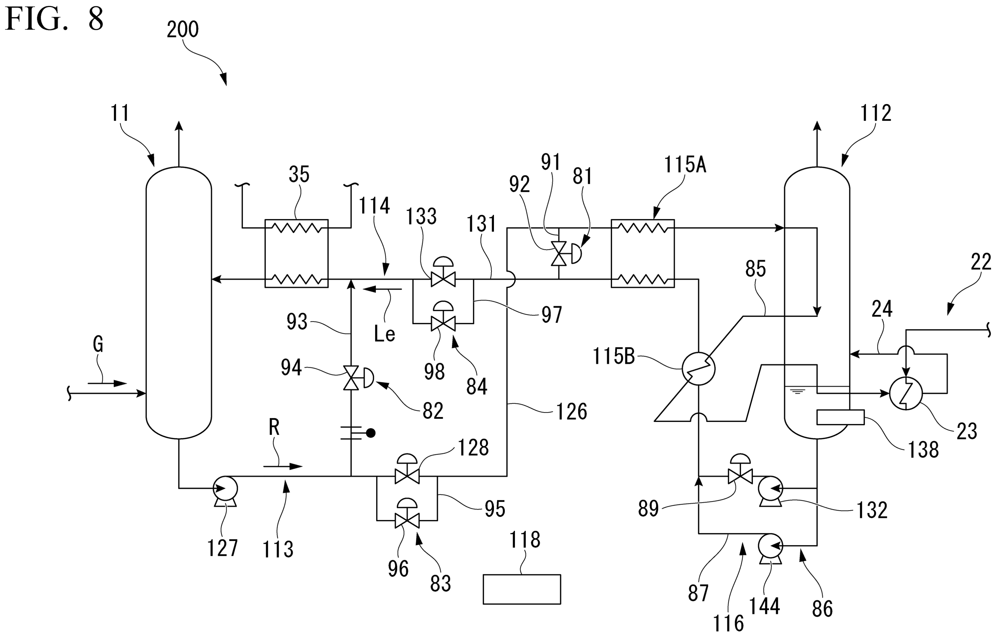

FIG. 8 is a diagram showing a schematic configuration of the carbon dioxide recovery system according to the second embodiment of the present disclosure.

As shown in FIG. 8, the carbon dioxide recovery system 200 according to the second embodiment includes the absorption tower 11, a regeneration tower 112, a rich liquid line 113, a lean liquid line 114, a plurality of heat exchange units 115A and 115B, a warm fluid supply unit 116, a first connection line 81, a first flow rate adjustment unit 83, a second flow rate adjustment unit 84, and a control device 118.

The absorption tower 11 has the same configuration as that of the absorption tower 11 of the above-described first embodiment and produces the rich liquid R corresponding to the absorption liquid having absorbed carbon dioxide of the exhaust gas G by allowing the exhaust gas G containing carbon dioxide to contact the absorption liquid capable of absorbing carbon dioxide.

The regeneration tower 112 discharges carbon dioxide from the rich liquid R by heating the rich liquid R and produces the lean liquid Le corresponding to the absorption liquid having discharged carbon dioxide. The regeneration tower 112 of the second embodiment can further store the absorption liquid as the warm fluid at the lower portion when the lean liquid Le is not produced. The regeneration tower 112 of the second embodiment includes a regeneration tower circulation pipe 85 which is provided in the middle of the up and down direction as the longitudinal direction so that the absorption liquid is sent to the outside of the regeneration tower 112 and is returned again.

The rich liquid line 113 guides the rich liquid R from the absorption tower 11 to the regeneration tower 112. The rich liquid line 113 includes a tubular rich liquid supply pipe 126 which forms a flow path through which the rich liquid R flows, a first pump 127 which sends the rich liquid R toward the regeneration tower 112, and a first valve 128 which opens and closes a flow path in the rich liquid supply pipe 126.

The lean liquid line 114 guides the lean liquid Le from the regeneration tower 112 to the absorption tower 11. The lean liquid line 114 of the second embodiment includes a tubular lean liquid supply pipe 131 which forms a flow path through which the lean liquid Le flows, a second pump 132 which sends the lean liquid Le towards the absorption tower 11, and a third valve 133 which opens and closes a flow path in the lean liquid supply pipe 131.

The heat exchange unit 115A and the heat exchange unit 115B exchange the heat of the lean liquid Le flowing through the lean liquid line 114 with the absorption liquid having a temperature different from that of the lean liquid Le flowing through the lean liquid line 114. The heat exchange unit 115A is connected to both the rich liquid supply pipe 126 and the lean liquid supply pipe 131. Similarly to the heat exchange unit 15 of the first embodiment, the heat exchange unit 115A can exchange heat between the rich liquid R flowing through the rich liquid supply pipe 126 of the rich liquid line 113 and the lean liquid Le flowing through the lean liquid supply pipe 131 of the lean liquid line 114.

The heat exchange unit 115B is connected to both the regeneration tower circulation pipe 85 and the lean liquid supply pipe 131. Specifically, the heat exchange unit 115B is disposed in the middle of the regeneration tower circulation pipe 85 and is disposed in the middle of the lean liquid supply pipe 131 between the heat exchange unit 115A and the regeneration tower 112. The heat exchange unit 115B can exchange heat between the absorption liquid flowing through the regeneration tower circulation pipe 85 and the lean liquid Le flowing through the lean liquid supply pipe 131 of the lean liquid line 114. Here, when the carbon dioxide recovery system 200 recovers carbon dioxide of the exhaust gas G, the temperature of the absorption liquid flowing through the regeneration tower circulation pipe 85 is lower than the temperature of the lean liquid Le sent from the lower portion of the regeneration tower 112. That is, the heat exchange unit 115B heats the absorption liquid flowing through the regeneration tower circulation pipe 85 by using the heat of the lean liquid Le.

The warm fluid supply unit 116 can supply the warm fluid Lh to the heat exchange unit 115A and the heat exchange unit 115B. The warm fluid supply unit 116 of the second embodiment includes the regeneration tower 112, a heating unit 138, and the first connection line 81. The warm fluid supply unit 116 illustrated in the second embodiment further includes a warm fluid delivery line 86.

The regeneration tower 112 that constitutes the warm fluid supply unit 116 is the regeneration tower 112 when the carbon dioxide recovery system 200 does not recover carbon dioxide of the exhaust gas G (hereinafter, simply referred to as a stop state). In other words, the warm fluid supply unit 116 uses the absorption liquid which is stored at the lower portion of the regeneration tower 112 when the lean liquid Le is not generated as the warm fluid Lh.

The heating unit 138 heats the warm fluid Lh. The heating unit 138 of the second embodiment is attached to the regeneration tower 112 and can heat the warm fluid Lh stored at the lower portion of the regeneration tower 112 in a stop state to a predetermined temperature (for example, 30°C or higher). Additionally, when the steam heating system 22 can be used in a stop state of the regeneration tower 112, the steam heating system 22 may be used instead of the heating unit 138.

The warm fluid delivery line 86 bypasses the second pump 132 and sends the warm fluid Lh from the regeneration tower 112 in a stop state toward the lean liquid line 114. The warm fluid delivery line 86 includes a warm fluid delivery pipe 87 and a warm fluid supply pump 144. The warm fluid delivery pipe 87 branches from the lean liquid supply pipe 131 between the second pump 132 and the regeneration tower 112 and is connected to join the lean liquid supply pipe 131 between the eleventh valve 89 and the heat exchange unit 115B. The warm fluid supply pump 144 has an output suitable for circulating the warm fluid Lh in the heat exchange units 115A and 115B. The output of the warm fluid supply pump 144 is smaller than, for example, the output of the second pump 132. Additionally, when the flow rate of the second pump 132 is variable, the warm fluid delivery line 86 may be omitted.

The first connection line 81 can allow the lean liquid line 114 and the rich liquid line 113 closer to the absorption tower 11 than the heat exchange units 115A and 115B to communicate with each other. The first connection line 81 includes a first connection pipe 91 and a first connection valve 92. The first connection pipe 91 branches from the lean liquid supply pipe 131 and is connected to join the rich liquid supply pipe 126. In other words, the first connection pipe 91 forms a flow path capable of allowing the absorption liquid flowing through the lean liquid supply pipe 131 to flow into the rich liquid supply pipe 126. The first connection valve 92 opens and closes a flow path in the first connection pipe 91.

A second connection line 82 can allow the rich liquid line 113 closer to the absorption tower 11 than the first connection line 81 to communicate with the lean liquid line 114 closer to the absorption tower 11 than the first connection line 81. Specifically, the second connection line 82 can allow the rich liquid supply pipe 126 between the first pump 127 and the first valve 128 to communicate with the lean liquid supply pipe 131 between the third valve 133 and the cooling device 35. The second connection line 82 includes a second connection pipe 93 and a second connection valve 94. The second connection pipe 93 branches from the rich liquid supply pipe 126 and is connected to join the lean liquid supply pipe 131. In other words, the second connection pipe 93 forms a flow path capable of allowing the absorption liquid flowing through the rich liquid supply pipe 126 to flow into the lean liquid supply pipe 131. The second connection valve 94 opens and closes a flow path in the second connection pipe 93.

The first flow rate adjustment unit 83 is connected in the middle of the rich liquid supply pipe 126 between the first connection line 81 and the second connection line 82. The first flow rate adjustment unit 83 is connected in parallel to the first valve 128. The first flow rate adjustment unit 83 includes a first flow rate adjustment pipe 95 and a first flow rate adjustment valve 96. The first flow rate adjustment pipe 95 forms a flow path which bypasses the first valve 128. The first flow rate adjustment valve 96 can gradually increase the opening degree from at least the closed state. That is, the first flow rate adjustment unit 83 can gradually increase the flow rate of the absorption liquid flowing through the rich liquid supply pipe 126 between the first connection line 81 and the second connection line 82 when the first valve 128 is closed.

The second flow rate adjustment unit 84 is connected in the middle of the lean liquid supply pipe 131 between the first connection line 81 and the second connection line 82. The second flow rate adjustment unit 84 is connected in parallel to the third valve 133. The second flow rate adjustment unit 84 includes a second flow rate adjustment pipe 97 and a second flow rate adjustment valve 98. The second flow rate adjustment pipe 97 forms a flow path which bypasses the third valve 133. The second flow rate adjustment valve 98 can gradually increase the opening degree from at least the closed state. That is, the second flow rate adjustment unit 84 can gradually increase the flow rate of the absorption liquid flowing through the lean liquid supply pipe 131 between the first connection line 81 and the second connection line 82 when the third valve 133 is closed.

The control device 118 can control the operation of the first valve 128, the third valve 133, the eleventh valve 89, the first connection valve 92, the second connection valve 94, the first flow rate adjustment valve 96, and the second flow rate adjustment valve 98 which are a plurality of control valves. The control device 118 can also switch the operation and stop of the warm fluid supply pump 144. The control device 118 can also control the operation of the heating unit 138. As shown in FIG. 2, the control device 118 of the second embodiment is also the computer including the central processing unit (CPU) 61, the read only memory (ROM) 62, the random access memory (RAM) 63, the storage 64, and the signal transmission/reception module 65.

### (Functional block diagram)

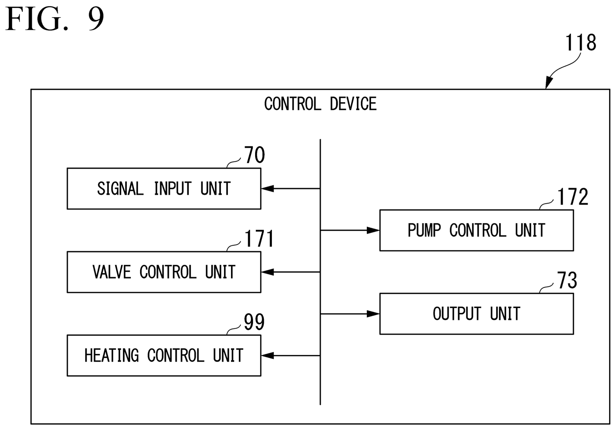

FIG. 9 is a functional block diagram of a control device according to the second embodiment of the present disclosure.

As shown in FIG. 9, the CPU 61 of the control device 18 realizes the functional configuration of each of the signal input unit 70, the valve control unit 171, the pump control unit 172, the output unit 73, and the heating control unit 99 by executing a program stored in advance in a storage device such as the ROM 62 or the storage 64.

The signal input unit 70 receives information on the operation status of the carbon dioxide recovery system 200 via the signal transmission/reception module 65 which is hardware.

The valve control unit 171 generates a control signal for controlling the operation of the first valve 128, the third valve 133, the eleventh valve 89, the first connection valve 92, the second connection valve 94, the first flow rate adjustment valve 96, and the second flow rate adjustment valve 98 based on the information on the operation status of the carbon dioxide recovery system 200 received by the signal input unit 70.

The pump control unit 172 generates a control signal for controlling the operation of the warm fluid supply pump 144 based on the information on the operation status of the carbon dioxide recovery system 200 received by the signal input unit 70.

The output unit 73 outputs the control signals generated by the valve control unit 171 and the pump control unit 172 to each of the first valve 128, the third valve 133, the eleventh valve 89, the first connection valve 92, the second connection valve 94, the first flow rate adjustment valve 96, the second flow rate adjustment valve 98, and the warm fluid supply pump 144 via the signal transmission/reception module 65.

The valve control unit 171 and the pump control unit 172 of the control device 118 can switch a first state in which the warm fluid Lh is supplied to the heat exchange units 115A and 115B to warm the heat exchange units 115A and 115B and a second state in which each of the rich liquid R produced by the absorption tower 11 and the lean liquid Le produced by the regeneration tower 112 is supplied to the heat exchange unit 115A to exchange heat therebetween based on the information on the operation status of the carbon dioxide recovery system 200. In the second state of the second embodiment, each of the lean liquid Le and the absorption liquid flowing through the regeneration tower circulation pipe 85 is supplied to the heat exchange unit 115B to exchange heat therebetween. Additionally, the switching of the first state and the second state in the second embodiment may be performed based on the operation input from the operator. The valve control unit 171 and the pump control unit 172 of the second embodiment also perform control of the transition state between the first state and the second state. In this transition state, the control device 118 performs control of starting the recovery of carbon dioxide from the exhaust gas G while continuing the supply of the warm fluid Lh toward the heat exchange units 115A and 115B.

### (Method of operating carbon dioxide recovery system)

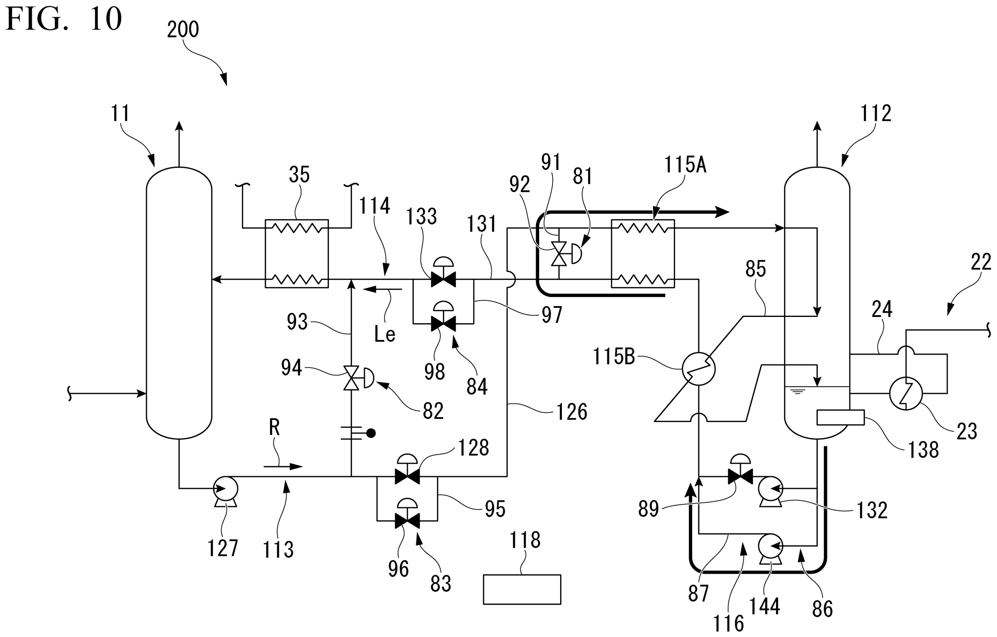

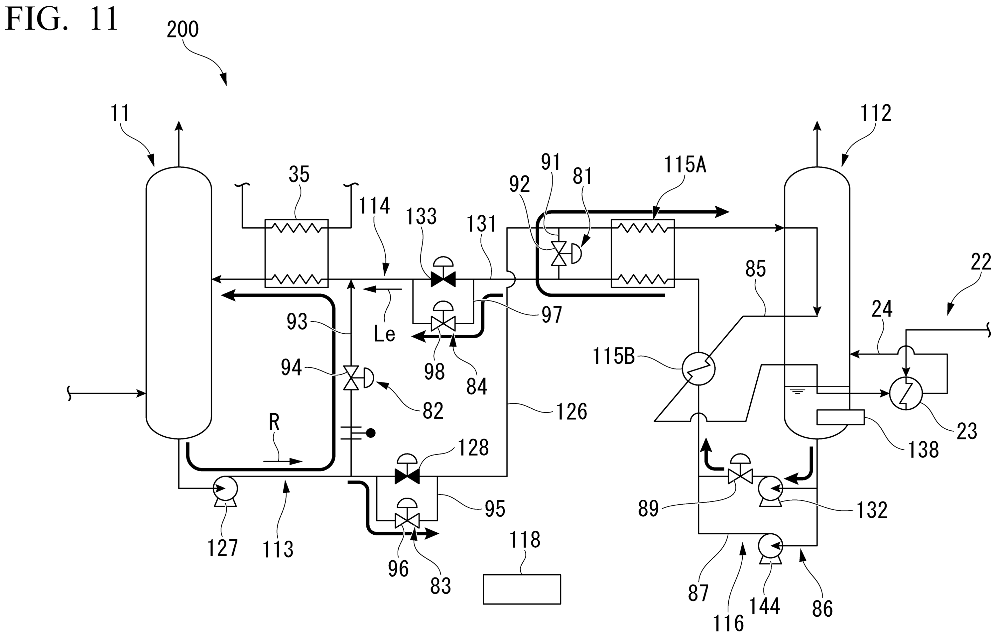

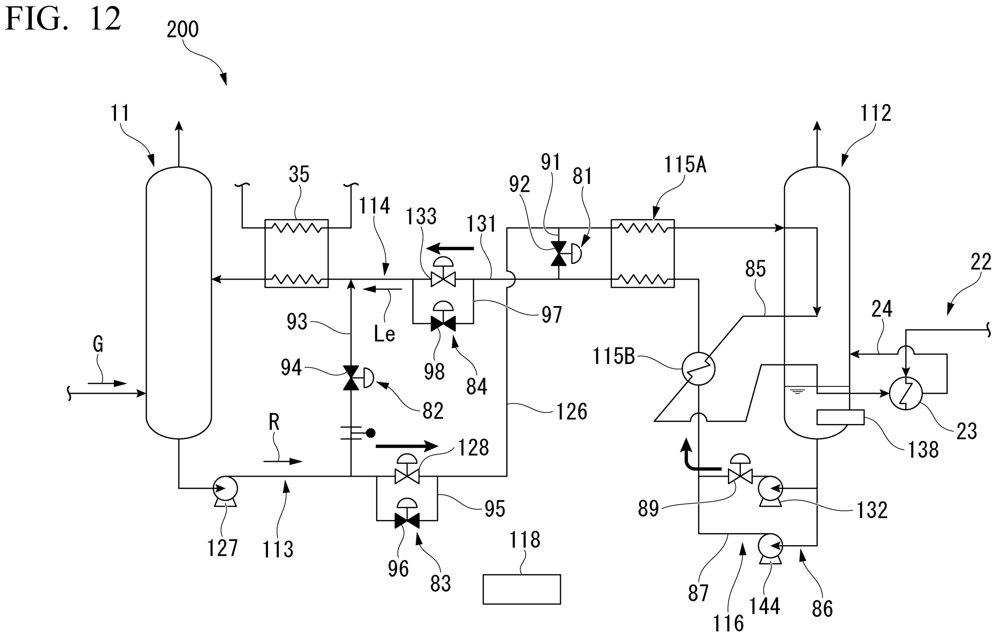

FIG. 10 is a diagram showing a first state of the carbon dioxide recovery system according to the second embodiment of the present disclosure. FIG. 11 is a diagram showing a transition state of the carbon dioxide recovery system according to the second embodiment of the present disclosure. FIG. 12 is a diagram showing a second state of the carbon dioxide recovery system according to the second embodiment of the present disclosure.

As shown in FIG. 4, the method of operating the carbon dioxide recovery system of this embodiment includes a warming step S11 and a transition step S12.

In the warming step S11, the first state is set in which the warm fluid Lh is supplied to the heat exchange units 115A and 115B to warm the heat exchange units 115A and 115B when the operation of the absorption tower 11 and the regeneration tower 112 is stopped.

In the transition step S12, the transition state is set in which the operation of the absorption tower 11 is started so that the absorption liquid Lh flowing from the absorption tower 11 into the rich liquid line 113 is circulated to return to the absorption tower 11 through the second connection line 82 and the lean liquid line 114 while continuing the warming of the heat exchange units 115A and 115B by the warm fluid Lh when starting the operation of the absorption tower 11 and the regeneration tower 112 from the first state. In the transition state of the second embodiment, the warm fluid Lh circulating through the regeneration tower 112, the lean liquid line 114, the first connection line 81, and the rich liquid line 113 and the absorption liquid circulating through the absorption tower 11, the rich liquid line 113, the second connection line 82, and the lean liquid line 114 are gradually mixed with each other by the first flow rate adjustment unit 83 and the second flow rate adjustment unit 84 to gradually decrease a temperature difference between the absorption liquid and the warm fluid Lh.

### (First state)

When the exhaust gas G is not introduced into the absorption tower 11 and the operation of the absorption tower 11 and the regeneration tower 112 is stopped, the control device 118 closes the first valve 128, the third valve 133, the eleventh valve 89, the first flow rate adjustment valve 96, and the second flow rate adjustment valve 98 and opens the first connection valve 92 as shown in FIG. 10 so that the carbon dioxide recovery system 200 is in the first state. The control device 118 operates each of the warm fluid supply pump 144 and the heating unit 138 to be in the first state (warming step S11). Here, the second connection valve 94 may be opened.

Accordingly, the absorption liquid stored in the regeneration tower 112 is warmed to be the warm fluid Lh. The warm fluid Lh is sent from the regeneration tower 112 by the warm fluid delivery line 86 and sequentially passes through the heat exchange unit 115B and the heat exchange unit 115A while flowing into the lean liquid supply pipe 131. The heat exchange unit 115B and the heat exchange unit 115A are warmed by the heat of the warm fluid Lh passing therethrough.

The warm fluid Lh passing through the heat exchange unit 115A flows from the lean liquid supply pipe 131 into the first connection pipe 91 of the first connection line 81. The warm fluid Lh flowing into the first connection pipe 91 flows into the rich liquid supply pipe 126 and passes through the heat exchange unit 115A. The warm fluid Lh warms the heat exchange unit 115A again when passing through the heat exchange unit 115A. Then, the warm fluid Lh reaches the upper portion of the regeneration tower 112 through the rich liquid supply pipe 126 and flows from the middle portion of the regeneration tower 112 into the regeneration tower circulation pipe 85. The warm fluid Lh flowing into the regeneration tower circulation pipe 85 passes through the heat exchange unit 115B. The warm fluid Lh warms the heat exchange unit 115B again when passing through the heat exchange unit 115B. The warm fluid Lh flowing through the regeneration tower circulation pipe 85 is returned to the regeneration tower 112, stored at the lower portion of the regeneration tower 112, and heated again by the heating unit 138. The heated warm fluid Lh repeats the above-described series of circulations.

### (Transition state)

The control device 118 of the second embodiment sets the carbon dioxide recovery system 200 to be in the second state after the transition state when starting the circulation of the absorption liquid between the absorption tower 11 and the regeneration tower 112 while stopping the recovery of carbon dioxide of the exhaust gas G by the absorption tower 11 and the regeneration tower 112. In the transition state, the control device 118 circulates the absorption liquid closer to the absorption tower 11 than the first valve 128 and the third valve 133 through the second connection line 82 and circulates the absorption liquid closer to the regeneration tower 112 than the first valve 128 and the third valve 133 through the first connection line 81. In the transition state, the control device 118 further gradually decreases a temperature difference between the absorption liquid circulating on the side closer to the absorption tower 11 than the first valve 128 and the third valve 133 and the absorption liquid circulating on the side closer to the regeneration tower 112 than the first valve 128 and the third valve 133 (transition step S12). Here, in the transition state of this embodiment, the absorption liquid on the side closer to the regeneration tower 112 than the first valve 128 and the third valve 133 is heated by using the circulation pipe 24 and the reboiler 23. Additionally, the heating unit 138 may automatically stop the heating of the absorption liquid at a time point in which the absorption liquid is at a predetermined temperature.

As shown in FIG. 11, in the transition state, the control device 118 stops the heating unit 138 and the warm fluid supply pump 144 by opening the second connection valve 94 and the eleventh valve 89 immediately before the recovery of carbon dioxide starts. Then, when the first pump 127, the second pump 132, and the steam heating system 22 are started, the control device 118 gradually opens the first flow rate adjustment valve 96 and the second flow rate adjustment valve 98 while closing the first valve 128 and the third valve 133. In other words, the opening degree of the first flow rate adjustment valve 96 and the second flow rate adjustment valve 98 is adjusted so that the flow rate of the rich liquid R flowing toward the regeneration tower 112 through the first flow rate adjustment valve 96 gradually increases and the flow rate of the lean liquid Le flowing toward the absorption tower 11 through the second flow rate adjustment valve 98 gradually increases.

### (Second state)

When the first flow rate adjustment valve 96 and the second flow rate adjustment valve 98 are opened to a predetermined maximum opening degree in the transition state, the control device 118 allows the carbon dioxide recovery system 200 to be in the second state. As shown in FIG. 12, the control device 118 opens the first valve 128, the third valve 133, and the eleventh valve 89 and closes the first connection valve 92 and the second connection valve 94. The control device 118 further maintains the warm fluid supply pump 144 in a stop state.

Accordingly, the absorption liquid having absorbed carbon dioxide in the absorption tower 11 reaches the heat exchange unit 115A through the rich liquid supply pipe 126 as the rich liquid R to exchange heat with the lean liquid Le in the heat exchange unit 115A and then is supplied to the regeneration tower 12. The absorption liquid corresponding to the rich liquid R supplied to the regeneration tower 12 flows into the regeneration tower circulation pipe 85 and reaches the heat exchange unit 115B while moving downward from the upper portion of the regeneration tower 12 by discharging carbon dioxide. The absorption liquid reaching the heat exchange unit 115B is heated by exchanging heat with the lean liquid Le flowing through the lean liquid supply pipe 131 and then is returned to the regeneration tower 112 by the regeneration tower circulation pipe 85. The absorption liquid returned to the regeneration tower 112 is heated by the steam heating system 22 and discharges carbon dioxide. The absorption liquid having discharged carbon dioxide in the regeneration tower 12 passes through the lean liquid supply pipe 131 as the lean liquid Le, exchanges heat with the absorption liquid having a temperature lower than that of the lean liquid Le by the heat exchange unit 115B and the heat exchange unit 115A, and then is supplied to the absorption tower 11.

### (Operation and effect)

The warm fluid supply unit 116 of the carbon dioxide recovery system 200 according to the above-described second embodiment includes the regeneration tower 112 which can store the absorption liquid at the lower portion as the warm fluid Lh, the heating unit 138 which heats the absorption liquid as the warm fluid Lh stored at the lower portion of the regeneration tower 112, and the first connection line 81 which allows the lean liquid line 114 on the side closer to the absorption tower 11 than the heat exchange unit 115A to communicate with the rich liquid line 113.

Accordingly, since the absorption liquid stored at the lower portion of the regeneration tower 112 is heated when carbon dioxide is not recovered from the exhaust gas G, the absorption liquid can be circulated in the heat exchange unit 115A as the warm fluid Lh.

Thus, it is possible to warm the heat exchange units 115A and 115B when carbon dioxide is not recovered from the exhaust gas G and to reduce the number of parts compared to the carbon dioxide recovery system 100 of the first embodiment.

In the above-described second embodiment, the second connection line 82 which allows the rich liquid line 113 closer to the absorption tower 11 than the first connection line 81 to communicate with the lean liquid line 114 closer to the absorption tower 11 than the first connection line 81, the first flow rate adjustment unit 83 which gradually increases the flow rate of the absorption liquid flowing through the rich liquid line 113 between the first connection line 81 and the second connection line 82, and the second flow rate adjustment unit 84 which gradually increases the flow rate of the absorption liquid flowing through the lean liquid line 114 between the first connection line 81 and the second connection line 82 are further provided.

With such a configuration, the absorption liquid flowing from the absorption tower 11 into the rich liquid line 113 can be returned to the absorption tower 11 while flowing into the lean liquid line 114 through the second connection line 82. Therefore, the cool absorption liquid immediately after starting the absorption tower 11 can be suppressed from flowing into the heat exchange units 115A and 115B from the absorption tower 11. Further, since the absorption liquid circulated by the second connection line 82 can be sent little by little to the heat exchange unit 115A by the first flow rate adjustment unit 83, a sudden change in temperature of the absorption liquid flowing into the heat exchange units 115A and 115B can be suppressed. Similarly, the second flow rate adjustment unit 84 can allow the absorption liquid heated by the regeneration tower 112 to join the absorption liquid close to the absorption tower 11 little by little to raise the temperature. Thus, it is possible to suppress unexpected damage to the constituting members by suppressing a decrease in temperature in the heat exchange units 115A and 115B and a load applied to the constituting members of the heat exchange units 115A and 115B.

### (Other embodiments)

The present disclosure is not limited to the configuration of the above-described embodiments and the design can be changed in the range not departing from the spirit thereof.

For example, in the above-described embodiments, a case has been described in which the carbon dioxide recovery systems 100 and 200 recover carbon dioxide of the exhaust gas G. However, a target gas from which carbon dioxide is recovered is not limited to the exhaust gas G if the target gas is a gas containing carbon dioxide.

In the above-described embodiments, a case has been described in which the transition state is provided between the first state and the second state, but the transition state may be omitted if necessary.

In each embodiment, a case has been described in which the control devices 18 and 118 open and close the plurality of control valves. However, the valve opening and closing operation is not limited to the control of the control devices 18 and 118. The valve may be opened and closed by the operation of the operator.

In the above-described second embodiment, a case has been described in which the heat exchange unit 115B is also warmed in addition to the heat exchange unit 115A. However, only the heat exchange unit 115A may be warmed or only the heat exchange unit 115B may be warmed. In the second embodiment, a case has been described in which only one set of the regeneration tower circulation pipe 85 and the heat exchange unit 115B is provided, but the present disclosure is not limited to this configuration. For example, a plurality of sets of the regeneration tower circulation pipe 85 and the heat exchange unit 115B may be provided. Further, the heat exchange unit 115B may be provided if necessary and may be omitted.

### <Appendix>

The carbon dioxide recovery system according to the embodiment is understood, for example, as below.

(1) According to a first aspect, the carbon dioxide recovery systems 100 and 200 include: the absorption tower 11 which allows a carbon dioxide containing gas G containing carbon dioxide to contact an absorption liquid capable of absorbing the carbon dioxide and produces the rich liquid R corresponding to the absorption liquid having absorbed the carbon dioxide of the carbon dioxide containing gas G; the regeneration towers 12 and 112 which heat the rich liquid R to discharge the carbon dioxide from the rich liquid R and produce the lean liquid Le corresponding to the absorption liquid having discharged the carbon dioxide; the rich liquid lines 13 and 113 which guide the rich liquid R from the absorption tower 11 to the regeneration towers 12 and 112; the lean liquid lines 14 and 114 which guide the lean liquid Le from the regeneration towers 12 and 112 to the absorption tower 11; the heat exchange units 15, 115A, and 115B which exchange the heat of the lean liquid Le flowing through the lean liquid lines 14 and 114 with the absorption liquid having a temperature different from that of the lean liquid flowing through the lean liquid lines 14 and 114; and the warm fluid supply units 16 and 116 which are able to supply the warm fluid Lh for warming the heat exchange units 15, 115A, and 115B to the heat exchange units 15, 115A, and 115B.

As an example of the carbon dioxide containing gas, an exhaust gas is exemplified. As an example of the absorption liquid, MEA is exemplified.

Accordingly, it is possible to suppress unexpected damage to the constituent members by reducing the load on the constituent members such as the gaskets of the heat exchange units 15, 115A, and 115B.

(2) According to a second aspect, the carbon dioxide recovery system 100 is the carbon dioxide recovery system 100 of (1) and the warm fluid supply unit 16 includes the vessel 37 which stores the warm fluid Lh, the heating unit 38 which heats the warm fluid Lh, and the circulation line 39 which supplies the warm fluid Lh stored in the vessel 37 to the heat exchange unit 15 and returns the warm fluid Lh supplied to the heat exchange unit 15 to the vessel 37.

Accordingly, it is possible to efficiently heat the warm fluid Lh and to easily continue the warming of the heat exchange unit 15.

(3) According to a third aspect, the carbon dioxide recovery system 100 is the carbon dioxide recovery system 100 of (2) further including: the heat exchange unit bypass lines 17A and 17B which bypass the absorption liquid so that the absorption liquid does not flow into the heat exchange unit 15.

Accordingly, since it is possible to prevent the low-temperature absorption liquid immediately after the start of operation from flowing into the heat exchange unit 15 while operating the absorption tower 11 and the regeneration tower 12, it is possible to further suppress a decrease in temperature of the heat exchange unit 15.

(4) According to a fourth aspect, the carbon dioxide recovery system 100 is the carbon dioxide recovery system 100 of (2) further including: the plurality of control valves 28, 29, 33, 34, 47, 48, 51, 52, 57, and 58 which are switchable between the first state in which the warm fluid Lh is supplied to the heat exchange unit 15 to warm the heat exchange unit 15 and the second state in which the absorption liquid is supplied to the heat exchange unit 15 to exchange heat therein; and the control device 18 which controls the operation of the plurality of control valves 28, 29, 33, 34, 47, 48, 51, 52, 57, and 58.

Accordingly, it is possible to automatically switch the first state and the second state. As a result, it is possible to reduce the load on the operator compared to a case in which the valve is manually switched.

(5) According to a fifth aspect, the carbon dioxide recovery system 200 is the carbon dioxide recovery system 200 of (1) and the warm fluid supply unit 116 includes the regeneration tower 112 which is able to store the absorption liquid at the lower portion as the warm fluid Lh, the heating unit 138 which heats the absorption liquid as the warm fluid Lh stored at the lower portion of the regeneration tower 112, and the first connection line 81 which is able to allow the lean liquid line 114 closer to the absorption tower 11 than the heat exchange units 115A and 115B to communicate with the rich liquid line 113.

Accordingly, it is possible to warm the heat exchange units 115A and 115B when carbon dioxide is not recovered from the exhaust gas G and to reduce the number of parts.

(6) According to a sixth aspect, the carbon dioxide recovery system 200 is the carbon dioxide recovery system 200 of (5) further including: the second connection line 82 which allows the rich liquid line 113 closer to the absorption tower 11 than the first connection line 81 to communicate with the lean liquid line 114 closer to the absorption tower 11 than the first connection line 81; the first flow rate adjustment unit 83 which is able to gradually increase the flow rate of the absorption liquid flowing through the rich liquid line 113 between the first connection line 81 and the second connection line 82; and the second flow rate adjustment unit 84 which is able to gradually increase the flow rate of the absorption liquid flowing through the lean liquid line 114 between the first connection line 81 and the second connection line 82.

Accordingly, the low-temperature absorption liquid circulated by the second connection line 82 can be sent little by little to the heat exchange unit 115A by the first flow rate adjustment unit 83. Further, the absorption liquid heated by the regeneration tower 112 can be joined to the absorption liquid close to the absorption tower 11 little by little to raise the temperature. Thus, it is possible to suppress unexpected damage to the constituting members by suppressing a decrease in temperature in the heat exchange units 115A and 115B and a load applied to the constituting members of the heat exchange units 115A and 115B.

(7) According to a seventh aspect, the carbon dioxide recovery system 200 is the carbon dioxide recovery system 200 of (6) further including: the plurality of control valves 89, 92, 94, 128, and 133 which are provided in the rich liquid line 113, the lean liquid line 114, the first connection line 81, and the second connection line 82 and are switchable between the first state in which the absorption liquid of the regeneration tower 112 is allowed to flow from the lean liquid line 114 into the rich liquid line 113 through the first connection line 81 as the warm fluid Lh and is returned to the regeneration tower 112 and the second state in which the rich liquid R is supplied from the absorption tower 11 to the regeneration tower 112 by the rich liquid line 113 and the lean liquid Le is supplied from the regeneration tower 112 to the absorption tower 11 by the lean liquid line 114; and the control device 118 which controls the plurality of control valves 89, 92, 94, 128, and 133, the first flow rate adjustment unit 83, and the second flow rate adjustment unit 84.

Accordingly, it is possible to automatically switch the first state and the second state in the carbon dioxide recovery system 200. As a result, it is possible to reduce the load on the operator compared to a case in which the valve is manually switched.

(8) According to an eighth aspect, a method of operating the carbon dioxide recovery system is a method of operating the carbon dioxide recovery systems 100 and 200 including: the absorption tower 11 which allows a carbon dioxide containing gas containing carbon dioxide to contact an absorption liquid capable of absorbing the carbon dioxide and produces the rich liquid R corresponding to the absorption liquid having absorbed the carbon dioxide of the carbon dioxide containing gas; the regeneration towers 12 and 112 which heat the rich liquid R to discharge the carbon dioxide from the rich liquid R and produce the lean liquid Le corresponding to the absorption liquid having discharged the carbon dioxide; the rich liquid lines 13 and 113 which guide the rich liquid R from the absorption tower 11 to the regeneration towers 12 and 112; the lean liquid lines 14 and 114 which guide the lean liquid Le from the regeneration towers 12 and 112 to the absorption tower 11; the heat exchange units 15, 115A, and 115B which exchange the heat of the lean liquid Le flowing through the lean liquid lines 14 and 114 with the absorption liquid having a temperature different from that of the lean liquid Le flowing through the lean liquid lines 14 and 114; and the warm fluid supply units 16 and 116 which are able to supply the warm fluid Lh for warming the heat exchange units 15, 115A, and 115B to the heat exchange units 15, 115A, and 115B, the method including: the warming steps S01 and S11 of warming the heat exchange units 15, 115A, and 115B by supplying the warm fluid Lh to the heat exchange units 15, 115A, and 115B when the operation of the absorption tower 11 and the regeneration towers 12 and 112 is stopped.

Accordingly, it is possible to suppress unexpected damage to the constituent members by reducing the load on the constituent members such as the gaskets of the heat exchange units 15, 115A, and 115B.

(9) According to a ninth aspect, the method of operating the carbon dioxide recovery system is the method of operating the carbon dioxide recovery system of (8), the carbon dioxide recovery system 100 further includes the heat exchange unit bypass lines 17A and 17B which bypass the absorption liquid so that the absorption liquid does not flow into the heat exchange unit 15, and the method further includes the transition step S02 of allowing the flow of the absorption liquid circulating between the absorption tower 11 and the regeneration tower 12 to bypass the heat exchange unit 15 while continuing the supply of the warm fluid Lh to the heat exchange unit 15 when starting the operation of the absorption tower 11 and the regeneration tower 12 from a stop state of the absorption tower 11 and the regeneration tower 12.

Accordingly, since it is possible to prevent the low-temperature absorption liquid immediately after the start of operation from flowing into the heat exchange unit 15 while operating the absorption tower 11 and the regeneration tower 12, it is possible to further suppress a decrease in temperature of the heat exchange unit 15.

(10) According to a tenth aspect, the method of operating the carbon dioxide recovery system is the method of operating the carbon dioxide recovery system 200 of (8) or (9), the warm fluid supply unit 116 includes the regeneration tower 112 which is able to store the absorption liquid at the lower portion as the warm fluid Lh, the heating unit 138 which heats the absorption liquid as the warm fluid Lh stored at the lower portion of the regeneration tower 112, and the first connection line 81 which is able to allow the lean liquid line 114 closer to the absorption tower 11 than the heat exchange units 115A and 115B to communicate with the rich liquid line 113, and in the warming step S11, the absorption liquid stored in the regeneration tower 112 is heated and passed through the heat exchange units 115A and 115B as the warm fluid Lh through the lean liquid line 114 and the warm fluid Lh passing through the heat exchange units 115A and 115B is returned to the regeneration tower 112 through the first connection line 81 and the rich liquid line 113.

Accordingly, it is possible to warm the heat exchange units 115A and 115B when carbon dioxide is not recovered from the exhaust gas G and to reduce the number of parts.

(11) According to an eleventh aspect, the method of operating the carbon dioxide recovery system is the method of operating the carbon dioxide recovery system 200 of (10), the carbon dioxide recovery system 200 further includes the second connection line 82 which is able to allow the rich liquid line 113 on the side closer to the absorption tower 11 than the first connection line 81 to communicate with the lean liquid line 114 on the side closer to the absorption tower 11 than the first connection line 81, and the method further includes: the transition step S12 of circulating the absorption liquid flowing from the absorption tower 11 into the rich liquid line 113 by starting the operation of the absorption tower 11 so that the absorption liquid is returned to the absorption tower 11 through the second connection line 82 and the lean liquid line 114 while continuously warming the heat exchange units 115A and 115B by the warm fluid Lh when starting the operation of the absorption tower 11 and the regeneration tower 112 from the stop state of the absorption tower 11 and the regeneration tower 112.

Accordingly, since the low-temperature absorption liquid immediately after the start of operation of the absorption tower 11 and the regeneration tower 112 is not sent to the heat exchange unit 115A, it is possible to suppress unexpected damage to the constituting members by suppressing a decrease in temperature in the heat exchange units 115A and 115B and a load applied to the constituting members of the heat exchange units 115A and 115B.

(12) According to a twelfth aspect, the method of operating the carbon dioxide recovery system is the method of operating the carbon dioxide recovery system 200 of (11), the carbon dioxide recovery system 200 further includes the first flow rate adjustment unit 83 which is able to gradually increase the flow rate of the absorption liquid flowing through the rich liquid line 113 between the first connection line 81 and the second connection line 82 and the second flow rate adjustment unit 84 which is able to gradually increase the flow rate of the absorption liquid flowing through the lean liquid line 114 between the first connection line 81 and the second connection line 82, and in the transition step S12, the warm fluid Lh circulating through the regeneration tower 112, the lean liquid line 114, the first connection line 81, and the rich liquid line 113 and the absorption liquid circulating through the absorption tower 11, the rich liquid line 113, the second connection line 82, and the lean liquid line 114 are gradually mixed by the first flow rate adjustment unit 83 and the second flow rate adjustment unit 84 to gradually decrease a temperature difference between the absorption liquid and the warm fluid Lh.

Accordingly, the low-temperature absorption liquid circulated by the second connection line 82 can be sent little by little to the heat exchange unit 115A by the first flow rate adjustment unit 83. Further, the absorption liquid heated by the regeneration tower 112 can be joined to the absorption liquid close to the absorption tower 11 little by little to raise the temperature. Thus, it is possible to suppress unexpected damage to the constituting members by suppressing a decrease in temperature in the heat exchange units 115A and 115B and a load applied to the constituting members of the heat exchange units 115A and 115B.

### [Industrial Applicability]

According to the carbon dioxide recovery system of the present disclosure, it is possible to reduce the load on the constituent members of the heat exchanger.

### [Reference Signs List]

100, 200 Carbon dioxide recovery system
11 Absorption tower
12, 112 Regeneration tower
13, 113 Rich liquid line
14, 114 Lean liquid line
15, 115A, 115B Heat exchange unit
16, 116 Warm fluid supply unit
17A, 17B Heat exchange unit bypass line
18, 118 Control device
20 Recovery unit
21 Cleaning unit
22 Steam heating system
23 Reboiler
24 Circulation pipe
26, 126 Rich liquid supply pipe
27, 127 First pump
28, 128 First valve
29 Second valve
31 Lean liquid supply pipe
32, 132 Second pump
33, 133 Third valve
34 Fourth valve
35 Cooling device
37 Vessel
38, 138 Heating unit
39 Circulation line
41 Warm fluid supply line
42 Warm fluid return line
43 Main supply pipe
44, 144 Warm fluid supply pump
45 First supply pipe
46 Second supply pipe
47 Fifth valve
48 Sixth valve
49 First return pipe
50 Second return pipe
51 Seventh valve
52 Eighth valve
53 Main return pipe
55 First bypass pipe
56 Second bypass pipe
57 Ninth valve
58 Tenth valve
61 CPU
62 ROM
63 RAM
64 Storage
65 Signal transmission/reception module
70 Signal input unit
71, 171 Valve control unit
72, 172 Pump control unit
73 Output unit
81 First connection line
82 Second connection line
83 First flow rate adjustment unit
84 Second flow rate adjustment unit
85 Regeneration tower circulation pipe
86 Warm fluid delivery line
87 Warm fluid delivery pipe
89 Eleventh valve
91 First connection pipe
92 First connection valve
93 Second connection pipe
94 Second connection valve
95 First flow rate adjustment pipe
96 First flow rate adjustment valve
97 Second flow rate adjustment pipe
98 Second flow rate adjustment valve
99 Heating control unit
S01, S11 Heating step
S02, S12 Transition step

## Claims

1. A carbon dioxide recovery system comprising:
an absorption tower which is configured to allow a carbon dioxide containing gas containing carbon dioxide to contact an absorption liquid capable of absorbing the carbon dioxide and produce a rich liquid corresponding to the absorption liquid having absorbed the carbon dioxide of the carbon dioxide containing gas;
a regeneration tower which is configured to heat the rich liquid to discharge the carbon dioxide from the rich liquid and produce a lean liquid corresponding to the absorption liquid having discharged the carbon dioxide;
a rich liquid line which is formed to guide the rich liquid from the absorption tower to the regeneration tower therethrough;
a lean liquid line which is formed to guide the lean liquid from the regeneration tower to the absorption tower therethrough;
a heat exchange unit which is configured to exchange the temperature of the lean liquid flowing through the lean liquid line with the absorption liquid having a temperature different from the lean liquid flowing through the lean liquid line; and
a warm fluid supply unit which is configured to allow a warm fluid for warming the heat exchange unit to be supplied to the heat exchange unit.

2. The carbon dioxide recovery system according to claim 1,
wherein the warm fluid supply unit includes a vessel which is configured to allow the warm fluid to be stored therein, a heating unit which is configured to heat the warm fluid, and a circulation line which is formed to supply the warm fluid stored in the vessel to the heat exchange unit and return the warm fluid supplied to the heat exchange unit to the vessel.

3. The carbon dioxide recovery system according to claim 2, further comprising:
a heat exchange unit bypass line which is formed to bypass the absorption liquid so that the absorption liquid does not flow into the heat exchange unit.

4. The carbon dioxide recovery system according to claim 2, further comprising:
a plurality of control valves which are configured to be switchable between a first state in which the warm fluid is supplied to the heat exchange unit to warm the heat exchange unit and a second state in which the absorption liquid is supplied to the heat exchange unit to exchange heat therein; and
a control device which is configured to control an operation of the plurality of control valves.

5. The carbon dioxide recovery system according to claim 1,
wherein the warm fluid supply unit includes the regeneration tower which is configured to allow the absorption liquid as the warm fluid to be stored at a lower portion therein, a heating unit which is configured to heat the absorption liquid as the warm fluid stored at the lower portion in the regeneration tower, and a first connection line which is configured to allow the lean liquid line on the side closer to the absorption tower than the heat exchange unit to communicate with the rich liquid line.

6. The carbon dioxide recovery system according to claim 5, further comprising:
a second connection line which is configured to allow the rich liquid line on the side closer to the absorption tower than the first connection line to communicate with the lean liquid line on the side closer to the absorption tower than the first connection line;
a first flow rate adjustment unit which is configured to gradually increase a flow rate of the absorption liquid flowing through the rich liquid line between the first connection line and the second connection line; and
a second flow rate adjustment unit which is configured to gradually increase a flow rate of the absorption liquid flowing through the lean liquid line between the first connection line and the second connection line.

7. The carbon dioxide recovery system according to claim 6, further comprising:
a plurality of control valves which are installed on the rich liquid line, the lean liquid line, the first connection line, and the second connection line and are configured to be switchable between a first state in which the absorption liquid of the regeneration tower is allowed to flow from the lean liquid line into the rich liquid line through the first connection line as the warm fluid and is returned to the regeneration tower and a second state in which the rich liquid is supplied from the absorption tower to the regeneration tower by the rich liquid line and the lean liquid is supplied from the regeneration tower to the absorption tower by the lean liquid line; and
a control device which is configured to control the plurality of control valves, the first flow rate adjustment unit, and the second flow rate adjustment unit.

8. A method of operating a carbon dioxide recovery system including: an absorption tower which is configured to allow a carbon dioxide containing gas containing carbon dioxide to contact an absorption liquid capable of absorbing the carbon dioxide and produce a rich liquid corresponding to the absorption liquid having absorbed the carbon dioxide of the carbon dioxide containing gas; a regeneration tower which is configured to heat the rich liquid to discharge the carbon dioxide from the rich liquid and produces a lean liquid corresponding to the absorption liquid having discharged the carbon dioxide; a rich liquid line which is formed to guide the rich liquid from the absorption tower to the regeneration tower therethrough; a lean liquid line which is formed to guide the lean liquid from the regeneration tower to the absorption tower therethrough; a heat exchange unit which is configured to exchange the temperature of the lean liquid flowing through the lean liquid line with the absorption liquid having a temperature different from the lean liquid flowing through the lean liquid line; and a warm fluid supply unit which is configured to a warm fluid for warming the heat exchange unit to be supplied to the heat exchange unit, the method comprising:
a warming step of warming the heat exchange unit by supplying the warm fluid to the heat exchange unit when the operation of the absorption tower and the regeneration tower is stopped.

9. The method of operating the carbon dioxide recovery system according to claim 8,
wherein the carbon dioxide recovery system further includes a heat exchange unit bypass line which is formed to bypass the absorption liquid so that the absorption liquid does not flow into the heat exchange unit, and
wherein the method further comprises:
a transition step of allowing the flow of the absorption liquid circulating between the absorption tower and the regeneration tower to bypass the heat exchange unit while continuing the supply of the warm fluid to the heat exchange unit when starting the operation of the absorption tower and the regeneration tower from a stop state of the absorption tower and the regeneration tower.

10. The method of operating the carbon dioxide recovery system according to claim 8,
wherein the warm fluid supply unit includes the regeneration tower which is configured to allow the absorption liquid as the warm fluid to be stored at a lower portion therein, a heating unit which is configured to heat the absorption liquid as the warm fluid stored at the lower portion in the regeneration tower, and a first connection line which is configured to allow the lean liquid line on the side closer to the absorption tower than the heat exchange unit to communicate with the rich liquid line, and
wherein in the warming step, the absorption liquid stored in the regeneration tower is heated and passed through the heat exchange unit through the lean liquid line as the warm fluid and the warm fluid passing through the heat exchange unit is returned to the regeneration tower through the first connection line and the rich liquid line.

11. The method of operating the carbon dioxide recovery system according to claim 10,
wherein the carbon dioxide recovery system further includes a second connection line which is configured to allow the rich liquid line on the side closer to the absorption tower than the first connection line to communicate with the lean liquid line on the side closer to the absorption tower than the first connection line, and
wherein the method further comprises:
a transition step of circulating the absorption liquid flowing from the absorption tower into the rich liquid line by starting the operation of the absorption tower so that the absorption liquid is returned to the absorption tower through the second connection line and the lean liquid line while continuously warming the heat exchange unit by the warm fluid when starting the operation of the absorption tower and the regeneration tower from a stop state of the absorption tower and the regeneration tower.

12. The method of operating the carbon dioxide recovery system according to claim 11,
wherein the carbon dioxide recovery system further includes a first flow rate adjustment unit which is configured to gradually increase a flow rate of the absorption liquid flowing through the rich liquid line between the first connection line and the second connection line and a second flow rate adjustment unit which is configured to gradually increase a flow rate of the absorption liquid flowing through the lean liquid line between the first connection line and the second connection line, and
wherein in the transition step, the warm fluid circulating through the regeneration tower, the lean liquid line, the first connection line, and the rich liquid line and the absorption liquid circulating through the absorption tower, the rich liquid line, the second connection line, and the lean liquid line are gradually mixed by the first flow rate adjustment unit and the second flow rate adjustment unit to gradually decrease a temperature difference between the absorption liquid and the warm fluid.
